# EUROPÄISCHE PATENTSCHRIFT

(11) **EP 3 529 197 B1**
(45) Veröffentlichungstag und Bekanntmachung des Hinweises auf die Patenterteilung: **09.11.2022**
(21) Anmeldenummer: 17745294.3
(22) Anmeldetag: 19.07.2017
(51) Int. Cl.: B67B 3/20, B67C 3/26, F16D 1/112, F16D 1/116

(54) **SCHNELLWECHSELKUPPLUNG FÜR EINE BEHÄLTERBEHANDLUNGSMASCHINE**
QUICK-CHANGE COUPLING FOR A CONTAINER TREATMENT MACHINE
RACCORD RAPIDE POUR UNE MACHINE DE TRAITEMENT DE RÉCIPIENTS

(30) Priorität: 19.10.2016 DE 102016220472
(43) Veröffentlichungstag der Anmeldung: 28.08.2019
(73) Patentinhaber: Krones AG, 93073 Neutraubling (DE)
(72) Erfinder: ANGETTER, Tobias, Neutraubling 93073 (DE); FUHRMANN, Monika, Neutraubling 93073 (DE)
(74) Vertreter: Grünecker Patent- und Rechtsanwälte PartG mbB
(86) Internationale Anmeldenummer: PCT/EP2017/068202
(87) Internationale Veröffentlichungsnummer: WO 2018/072900

(56) Entgegenhaltungen:
- EP-A1- 0 850 872
- EP-A1- 3 034 457
- DE-A1-102007 028 429
- US-A1- 2004 237 471
- US-A1- 2007 084 151

## Beschreibung

Die Erfindung betrifft eine Schnellwechselkupplung für eine Verschließmaschine gemäß dem Oberbegriff des Anspruchs 1 und wie bekannt aus der EP 0 850 872 A1 oder der US 2007/084151.

An Behälterbehandlungsmaschinen dienen Schnellwechselkupplungen beispielsweise dazu, dauerhaft montierte Antriebswellen und/oder Hubstangen mit austauschbaren Haltern für Behälterkomponenten oder dergleichen ohne Werkzeug lösbar zu verbinden. Beispielsweise übertragen Verschließmaschinen beim Anbringen von Schraubverschlusskappen sowohl unidirektional Drehmomente als auch axial Andruckkräfte. Die korrespondierenden Teile der Schnellwechselkupplung müssen daher im Arbeitsbetrieb sowohl drehfest als auch axial fest verbunden sein. Zu diesem Zweck offenbart die DE 10 2007 028 429 A1 eine Verschließmaschine, bei der zwischen einem oberen Antriebsteil der Verschließköpfe und einem unteren Werkzeughalter eine Schwalbenschwanzverbindung ausgebildet ist, so dass sich der Werkzeughalter seitlich aus dem Antriebsteil ziehen oder drücken lässt. Zusätzlich sind Rastmechanismen mit Federn oder der gleichen vorhanden, um das Antriebsteil und den Werkzeughalter in einer bezüglich einer gemeinsamen Drehachse koaxialen Stellung zu arretieren.

Nachteilig bei obiger Schnellwechselkupplung sind die vergleichsweise scharfkantigen Hinterschneidungen der Schwalbenschwanzverbindung und offenliegende Federn für die Rastverbindung. Dadurch wird zum einen die Reinigung des zugehörigen Verschließkopfes insgesamt erschwert. Zum anderen können sich die Federn aus ihren Sitzen lösen, so dass der Werkzeughalter im Arbeitsbetrieb nicht mehr zuverlässig arretiert ist und sich gegebenenfalls sogar ablösen kann. Ferner ist für den Wechsel des Werkzeughalters Platz zum seitlichen Abziehen nötig, wofür zusätzlicher Bauraum an der Maschine vorzusehen ist.

Es besteht daher Bedarf für eine Schnellwechselkupplung, die eine unidirektionale Drehmomentübertragung und axiale Kraftübertragung an Behälterbehandlungsmaschinen bei einfacher Handhabung während des Wechsels und/oder einfacher Reinigung und/oder sicherem Arbeitsbetrieb ermöglicht.

Die gestellte Aufgabe wird mit einer Schnellwechselkupplung gemäß Anspruch 1 gelöst. Demnach ist diese für eine Verschließmaschine ausgelegt. Die Schnellwechselkupplung ist eine lösbare Verbindung eines Außenteils mit einem darin formschlüssig eingreifenden Innenteil, zwischen denen Drehmomente in einer Arbeitsdrehrichtung sowie Axialkräfte, insbesondere Andruckkräfte, übertragen werden können. Ferner sind das Außenteil und das Innenteil durch Ineinanderschieben und Verdrehen miteinander verbindbar. Erfindungsgemäß umfasst das Außenteil nach innen federnd vorgespannte Raststifte, und das Innenteil umfasst erste Führungsfasen für die Raststifte, um die Raststifte beim Ineinanderschieben nach außen zu drücken, sowie Rastaussparungen, in die die Raststifte beim anschließenden Verdrehen des Außenteils und des Innenteils zueinander in Arbeitsdrehrichtung sowohl drehfest als auch axial fest einrasten können.

Die Raststifte sitzen dann im Wesentlichen in Arbeitsdrehrichtung spielfrei und axial spielfrei in den Rastaussparungen. Die Raststifte können auch als Rastbolzen bezeichnet werden. Sie sind in zugehörigen Kanälen, insbesondere Bohrungen, nach innen/außen verschiebbar geführt.

Unter einem Einrasten "beim" Verdrehen des Außenteils und des Innenteils zueinander ist zu verstehen, dass die Raststifte unmittelbar am Ende des Verdrehens nach innen, vorzugsweise in radialer Richtung, in die Rastaussparungen mittels Federspannung einrasten. Zwischen dem Verdrehen und dem Einrasten findet somit keine separate Axialbewegung von Außenteil und Innenteil zueinander statt, im Gegensatz zu herkömmlichen Bajonettkupplungen/ -verschlüssen. Dadurch wird zusätzlich zu einer unidirektionalen Drehmomentübertragung auch eine im Wesentlichen spielfreie Übertragung axialer Andruckkräfte ohne Gefahr eines unbeabsichtigten Lösens der Kupplungsverbindung ermöglicht.

Das Ineinanderschieben von Außenteil und Innenteil beim Verbinden der Schnellwechselkupplung erfolgt im Wesentlichen axial, ebenso das Trennen der Schnellwechselkupplung durch Auseinanderziehen von Außenteil und Innenteil. Folglich ist ein seitlicher Zugang und/oder Platz zum seitlichen Abziehen des Innenteils vom Außenteil entbehrlich.

Die Rastaussparungen und die Raststifte sind dann so ausgebildet, dass das Außenteil und das Innenteil bei eingerasteten Raststiften sowohl in der Arbeitsdrehrichtung fest als auch in einer Arbeitshubrichtung fest an einander gekoppelt sind. Insbesondere können sowohl Drehmomente als auch Andruckkräfte mittels der Schnellwechselkupplung im Wesentlichen spielfrei übertragen werden.

Die Führungsfasen sind als teilumfänglich abgesetzte Fasen im Sinne von mit einem zunehmenden radialen Abstand bezüglich der Drehachse, also schräg nach außen, verlaufenden Nuten ausgebildet. Der Führungsquerschnitt der Führungsfasen für die Raststifte muss nicht im Sinne einer umfänglich entlang einer Kante verlaufenden Fase eben sein, sondern kann beispielsweise konkav ausgebildet sein oder anderweitig zu den Raststiften passend ausgebildet sein.

Beim Ineinanderschieben bewirkt eine Relativbewegung der Raststifte in den Führungsfasen, dass die Raststifte zunehmend in das Außenteil gedrückt werden. Die Raststifte sind zu diesem Zweck vorzugsweise mittels Druckfedern oder von wenigstens einer anderweitig federnden Lagerung vorgespannt und/oder radial im Außenteil geführt.

Vorzugsweise sind an den Rastaussparungen zweite Führungsfasen für die Raststifte ausgebildet, um die Raststifte beim Verdrehen entgegen der Arbeitsdrehrichtung nach außen zu drücken und aus den Rastaussparungen zu führen. Dabei werden die Raststifte zunehmend in das Außenteil gedrückt. Dies ermöglicht ein einfaches Trennen der Schnellwechselkupplung durch Zurückdrehen und anschließendes Auseinanderziehen von Innenteil und Außenteil ohne zusätzliche manuelle Entriegelung und mit geringem Kraftaufwand.

Vorzugsweise sind zwischen den ersten und zweiten Führungsfasen im Wesentlichen umfänglich verlaufende Führungsnuten für die Raststifte ausgebildet. Dadurch können die von der ersten Führungsfase nach außen gedrückten Raststifte präzise in die Rastaussparungen geführt werden. Ebenso können die von der zweiten Führungsfase nach außen gedrückten Raststifte präzise in die erste Führungsfase zurückgeführt werden. Außenteil und Innenteil führen sich dann gegenseitig, so dass die Schnellwechselkupplung ohne oder mit nur geringfügiger visueller Kontrolle verbunden und getrennt werden kann.

Vorzugsweise weisen die Führungsnuten eine axiale Steigung auf. Beispielsweise ist die axiale Steigung so ausgebildet, dass das Außenteil und das Innenteil beim Verdrehen in Arbeitsdrehrichtung axial aufeinander zu bewegt werden. Dadurch können das Außenteil und das Innenteil an einander gepresst werden, um die Festigkeit und/oder Stabilität der Verbindung zu erhöhen.

Ergänzend oder alternativ weisen die Führungsnuten eine exzentrische Führungsfläche für die Raststifte mit einem zu den Rastaussparungen hin abnehmenden Führungsradius auf. Dadurch nimmt das Ausmaß, in dem die Raststifte in das Außenteil gedrückt werden, zu den Rastaussparungen hin ab. Dies erleichtert zum einen das manuell erzwungene Bewegen der Raststifte aus den Rastaussparungen und erschwert zum anderen ein selbsttätiges Trennen der Schnellwechselkupplung, da der den federnd gelagerten Raststiften entgegengebrachte Widerstand beim Verdrehen entgegen der Arbeitsdrehrichtung, also mit zunehmendem Abstand von den Rastaussparungen, zunimmt.

Vorzugsweise weisen die Raststifte eine im Wesentlichen ebene und/oder konvex gekrümmte Stirnfläche auf und die Führungsnuten insbesondere einen damit korrespondierenden Führungsquerschnitt. Dies ermöglicht eine besonders präzise Führung der Raststifte mit geringem Reibungswiderstand bis in die Rastaussparungen.

Vorzugsweise verlaufen die ersten Führungsfasen quer, insbesondere orthogonal, zur Arbeitsdrehrichtung und in Richtung vom Außenteil weg schräg nach außen. Beispielsweise sind die ersten Führungsfasen dann in radialen Ebenen bezüglich der Drehachse ausgerichtet. Dies erleichtert ein im Wesentlichen axiales Ineinanderschieben von Außenteil und Innenteil.

Vorzugsweise sind die Raststifte, die ersten Führungsfasen und die Rastaussparungen mindestens dreifach in einander entsprechender umfänglicher Verteilung ausgebildet. Damit lässt sich eine gleichmäßige Lastenverteilung für die Übertragung von Drehmomenten und axialen Kräften mit vergleichsweise geringem Herstellungsaufwand bewerkstelligen. Eine umfänglich gleichmäßige Verteilung, in Abständen von je 120°, ermöglicht eine besonders einfache Verbindung der Schnellwechselkupplung. Eine umfänglich nicht gleichmäßige Verteilung, beispielsweise in Abständen von 110, 120 und 130°, eignet sich besonders für eine drehlagengetreue Verbindung von Außenteil und Innenteil. Dies wäre entsprechend auch bei einer davon abweichenden Anzahl der Raststifte, ersten Führungsfasen und Rastaussparungen möglich, beispielsweise bei deren vierfacher oder fünffacher Ausführung pro Schnellwechselkupplung.

Vorzugsweise weisen die Rastaussparungen und Raststifte in einander passende, runde Querschnitte auf. Dies vereinfacht die Führung der Raststifte in den Rastaussparungen, in den Führungsfasen und in den Führungsnuten sowohl beim Ineinanderschieben als auch beim Verdrehen und Ein-/Ausrasten.

Vorzugsweise sind die Rastaussparungen Durchgangslöcher. Dies vereinfacht die Herstellung und Reinigung des Innenteils durch Minimierung schlecht zugänglicher Kanten und Ecken.

Vorzugsweise umfasst das Außenteil zum Vorspannen der Raststifte diesen zugeordnete Druckfedern und/oder einen die Raststifte umspannenden elastischen Ring. Die federnde Lagerung könnte beispielsweise einen im Wesentlichen umfänglich ausgerichteten elastischen Ring, insbesondere einen O-Ring, umfassen, der die Raststifte gemeinsam umspannt und mittels Dehnspannung nach innen drückt. Zu diesem Zweck kann am Außenteil ein entsprechender Sitz für den elastischen Ring ausgebildet sein, vorzugsweise eine umfänglich verlaufende Nut und/oder wenigstens eine den elastischen Ring teilumfänglich haltende Klammer.

Vorzugsweise sind am Außenteil ferner mechanische Anschläge für die Raststifte ausgebildet, die ein Ausfahren der Raststifte nach innen hin begrenzen. Die Raststifte und Druckfedern können dann nicht vom Außenteil abfallen.

Vorzugsweise sind am Außenteil Reinigungslöcher ausgebildet. Dies ermöglicht eine einfache Reinigung der Schnellwechselkupplung, gegebenenfalls auch in verbundenem Zustand. Vorzugsweise sind am Außenteil und am Innenteil zueinander passende konzentrische Passflächen ausgebildet. Dies begünstigt ein einfaches Verbinden des Innenteils und des Außenteils miteinander ebenso wie die Stabilität der hergestellten Kupplungsverbindung.

Vorzugsweise ist das Außenteil als Antriebsverbindung zu einer insbesondere oberhalb angeordneten Welle und/oder Hubstange ausgebildet. Beispielsweise umfasst das Außenteil zu diesem Zweck ein Gewinde, insbesondere ein Außengewinde, mit einer Schließrichtung in Arbeitsdrehrichtung. Über die Antriebsverbindung wird dann vorzugsweise sowohl ein Arbeitsdrehmoment als auch eine axiale Andruckkraft übertragen.

Vorzugsweise ist das Innenteil als auswechselbarer Halter für einen Werkzeugeinsatz und/oder eine Behälterkomponente ausgebildet, insbesondere als Halter für einen Verschlusskappeneinsatz und/oder eine Schraubverschlusskappe. Das Innenteil lässt sich dann für einen Formatwechsel, beispielsweise bei Verwendung eines anderen Verschlusskappentyps, werkzeuglos austauschen, während das Außenteil dauerhaft an der zugehörigen Behandlungsmaschine montiert ist.

Prinzipiell könnte auch das Innenteil als Antriebsverbindung verwendet werden und das Außenteil als auswechselbarer Halter für einen Werkzeugeinsatz oder eine Behälterkomponente.

Die gestellte Aufgabe wird ebenso mit einem Verschließkopf gelöst, der zum Anbringen von Schraubverschlusskappen auf Behälter geeignet ist und eine Schnellwechselkupplung nach wenigstens einer der vorigen Ausführungsformen umfasst. Der Verschließkopf überträgt dann vorzugsweise sowohl ein Drehmoment unidirektional als auch eine Andruckkraft beim Anbringen der Schraubverschlusskappen. Ferner überträgt der Verschließkopf zum Aufnehmen der Schraubverschlusskappen in einem zugeordneten Verschlusskappeneinsatz eine axiale Andruckkraft, um die Schraubverschlusskappen in die Verschlusskappeneinsätze zu drücken.

Die gestellte Aufgabe wird ebenso mit einer Verschließmaschine für Behälter gelöst, die ein kontinuierlich drehbares Behälterkarussell und mehrere daran umlaufende Verschließköpfe wie oben umfasst.

Eine bevorzugte Ausführungsform der Erfindung ist in den Zeichnungen dargestellt. Es zeigen:
- Figur 1: einen Längsschnitt durch die Schnellwechselkupplung;
- Figur 2: eine seitliche Ansicht des Innenteils der Schnellwechselkupplung;
- Figur 3: einen Querschnitt des Innenteils entlang der Schnittlinie C-C der Figur 1;
- Figur 4: einen schematischen Querschnitt eines Raststifts und einer Führungsnut;
- Figur 5: eine schematische seitliche Ansicht einer Behandlungsmaschine für Behälter; und
- Figur 6: einen schematischen Querschnitt mit alternativer federnder Lagerung der Raststifte.

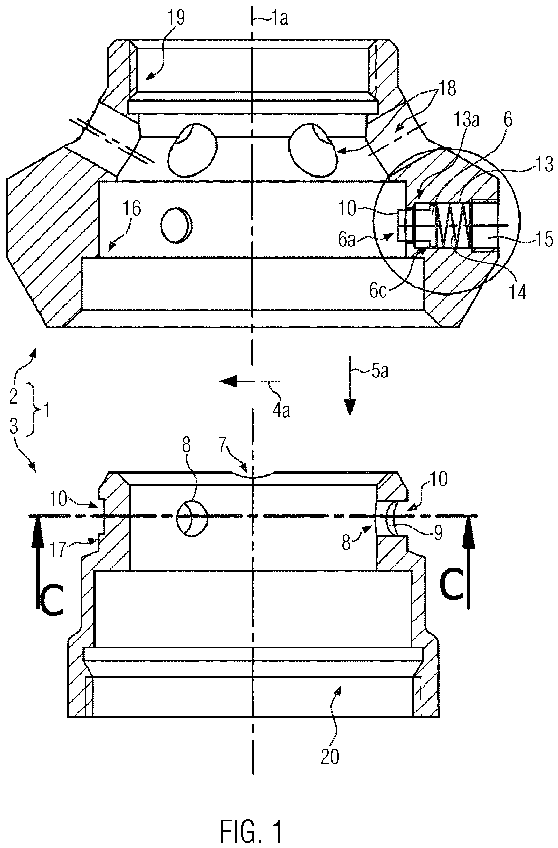

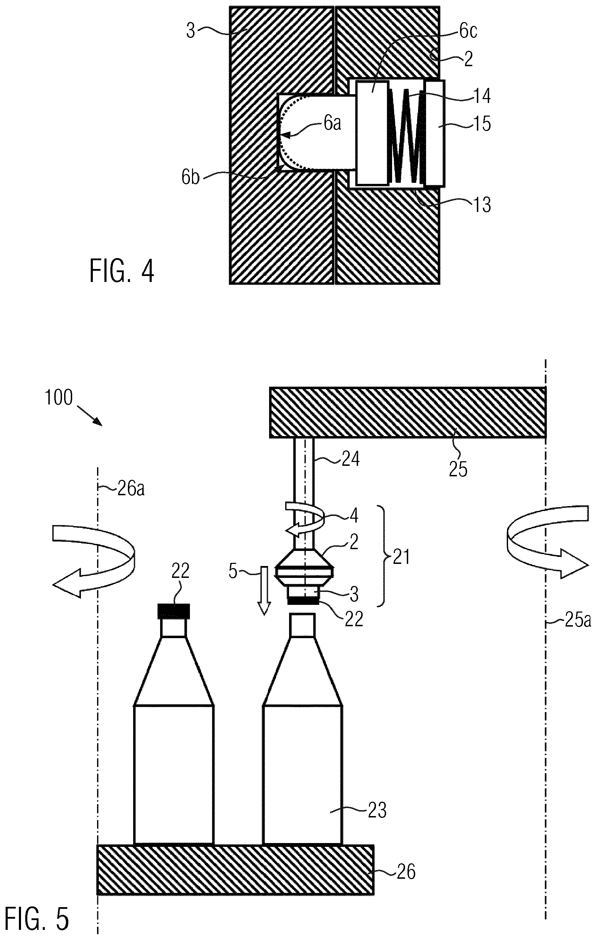

Wie insbesondere die Figuren 1 und 5 im Längsschnitt erkennen lassen, umfasst die Schnellwechselkupplung 1 für Behälterbehandlungsmaschinen 100, wie beispielsweise Verschließmaschinen, ein Außenteil 2 und ein formschlüssig in dieses eingreifendes Innenteil 3. Zwischen dem Außenteil 2 und dem Innenteil 3 können Drehmomente 4 in einer Arbeitsdrehrichtung 4a sowie Axialkräfte 5 insbesondere in einer Arbeitshubrichtung 5a übertragen werden.

Das Außenteil 2 und das Innenteil 3 können durch axiales Ineinanderschieben und durch Verdrehen in der Arbeitsdrehrichtung 4a um eine gemeinsame Drehachse 1a fest miteinander verbunden werden. Zu diesem Zweck sind am Außenteil 2 nach innen federnd vorgespannte Raststifte 6 vorzugsweise radial verschiebbar gelagert.

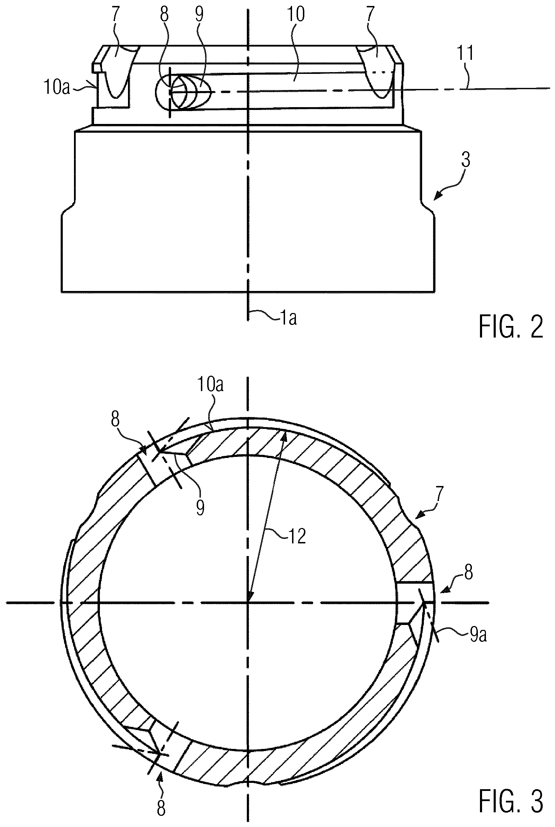

Passend zur Verteilung und Formgebung der Raststifte 6 sind am Innenteil mindestens 3 erste äußere Führungsfasen 7 ausgebildet. Diese verlaufen quer, insbesondere orthogonal, zur Arbeitsdrehrichtung 4a und in Richtung vom Außenteil 2 weg schräg nach außen. Wie beispielsweise die Figur 2 erkennen lässt, dienen die ersten Führungsfasen 7 zum Einfädeln der Raststifte 6 am Innenteil 3 unter einer Vorspannung, die beim Ineinanderschieben vorzugsweise kontinuierlich zunimmt.

Am Innenteil 3 sind ferner Rastaussparungen 8 für die Raststifte 6 ausgebildet, beispielsweise in Form von im Wesentlichen runden Durchgangslöchern. An den Rastaussparungen 8 sind vorzugsweise zweite äußere Führungsfasen 9 mit einer in der Figur 3 schematisch angedeuteten Rampensteigung 9a ausgebildet, um die eingerasteten Raststifte 6 beim manuellen Verdrehen entgegen der Arbeitsdrehrichtung 4a wieder aus den Rastaussparungen 8 heraus zu führen.

Die ersten und zweiten Führungsfasen 7, 9 sind jeweils durch im Wesentlichen umfänglich verlaufende Führungsnuten 10 für die Raststifte 6 miteinander verbunden. Dies ermöglicht eine einfache Herstellung formschlüssig in einander greifender Strukturen an Außenteil 2 und Innenteil 3. Die ersten und zweiten Führungsfasen 7, 9 könnten allerdings auch einen komplexeren, insbesondere gekrümmten Verlauf haben und unmittelbar ineinander übergehen, um eine gegenseitige Führung von Außenteil 2 und Innenteil 3 beim Ineinanderschieben und Verdrehen zu bewirken. Ebenso könnten die zweiten Führungsfasen 9 prinzipiell durch funktional gleichwertige Abschrägungen, Fasen oder dergleichen an den Raststiften 6 ersetzt oder ergänzt werden.

Die Führungsnuten 10 können eine axiale Steigung 11 aufweisen. Insbesondere ist die axiale Steigung 11 dann so ausgebildet, dass das Außenteil 2 und das Innenteil 3 beim Verdrehen in Arbeitsdrehrichtung 4a axial aufeinander zu geführt werden. Außenteil 2 und Innenteil 3 können dadurch bei verbundener Schnellwechselkupplung 1 auch an einander gepresst werden.

Ergänzend oder alternativ können die Führungsnuten 10 exzentrische Führungsflächen 10a für die Raststifte 6 aufweisen mit einem von den ersten Führungsfasen 7 zu den zugehörigen Rastaussparungen 8 hin abnehmenden Führungsradius 12 bezüglich der Drehachse 1a. Dadurch nimmt die Vorspannung an den Raststiften 6 beim Verdrehen in Arbeitsdrehrichtung 4a, also zu den Rastaussparungen 8 hin, ab.

Dies erleichtert zum einen das erzwungene Herausführen der Raststifte 6 aus den Rastaussparungen 8 beim manuellen Trennen der Schnellwechselkupplung 1 entgegen der Arbeitsdrehrichtung 4a und verhindert zum anderen ein ungewolltes Trennen der unbelasteten Schnellwechselkupplung 1. Anders gesagt begünstigen exzentrische Führungsflächen 10a eine Relativbewegung der Raststifte 6 in Arbeitsdrehrichtung 4a und verhindern ein zu leichtgängiges oder selbsttätiges Verdrehen in der Gegenrichtung.

Wie insbesondere in der Figur 3 zu erkennen ist, sind die Raststifte 6, die Führungsfasen 7, 9 und die Rastaussparungen 8 vorzugsweise jeweils dreifach in gleichmäßigen Winkelabständen zu je 120° voneinander ausgebildet. Dies ermöglicht eine gleichmäßige Lastverteilung und eine einfache manuelle Verbindung von Außenteil 2 und Innenteil 3, gegebenenfalls auch ohne Sichtkontrolle. Es wäre aber auch eine davon abweichende Anzahl von Verbindungselementen pro Schnellwechselkupplung 1 denkbar, ebenso ungleichmäßige Winkelabstände (nicht dargestellt), um ein Ineinanderschieben ausschließlich in einer bestimmten relativen Drehlage von Außenteil 2 und Innenteil 3 zueinander zu erlauben.

Die Raststifte 6 umfassen beispielsweise plane Stirnflächen 6a, die an den Führungsflächen 10a entlang gleiten können. Zu diesem Zweck können die Stirnflächen 6a auch von Fasen 6b umrandet und/oder konvex ausgebildet sein (in der Figur 4 schematisch gestrichelt angedeutet).

Die Führungsfläche 10a weist dann vorzugsweise einen mit der Stirnfläche 6a korrespondierenden Querschnitt auf derart, dass die Raststifte 6 darin entlang der axialen Steigungen 11 und/oder exzentrischen Führungsradien 12 geführt werden.

Die Raststifte 6 sind im Außenteil 2 in vorzugsweise radialen Bohrungen 13 oder dergleichen Kanälen geführt und beispielsweise mittels Druckfedern 14 nach innen federnd vorgespannt. Dadurch laufen die Raststifte 6 beim Verbinden/Trennen der Schnellwechselkupplung 1 stets in den Führungsfasen 7, 9 und in der Führungsnut 10.

Die Bohrungen 13 umfassen radial innen liegende Querschnittsverengungen als Anschläge 13a für an den Raststiften 6 radial außenliegend ausgebildete Köpfe 6c. Als Gegenlager für die Druckfedern 14 oder funktional entsprechende elastische Elemente dienen beispielsweise Madenschrauben 15. Diese verhindern gemeinsam mit den Anschlägen 13a und den Köpfen 6c ein Herausfallen der Raststifte 6 und der Druckfedern 14. An deren Stelle oder ergänzend könnte für jeden Raststift 6 auch ein elastisch komprimierbares Kissen aus Gummi, Silikon, Schaumstoff oder einem anderen elastischen Material in/an der zugeordneten Bohrung 13 angeordnet sein, um die Vorspannung zu erzeugen.

Die vorzugsweise runden Querschnitte der Rastaussparungen 8 und der Raststifte 6 passen derart zueinander, dass die Raststifte 6 mittels der Vorspannung selbsttätig in die Rastaussparungen 8 einrasten und das Innenteil 3 bei eingerasteten Raststiften 6 sowohl in der Arbeitsdrehrichtung 4a als auch in der Arbeitshubrichtung 5a fest an das Außenteil 2 gekoppelt ist. Wie die Figur 5 schematisch andeutet, können daher sowohl Drehmomente 4 als auch Axialkräfte 5, insbesondere Andruckkräfte, mittels der Schnellwechselkupplung 1 im Wesentlichen spielfrei zwischen Außenteil 2 und Innenteil 3 übertragen werden, insbesondere vom Außenteil 2 auf das Innenteil 3.

Am Außenteil 2 und am Innenteil 3 sind vorzugsweise konzentrische Passflächen 16, 17 ausgebildet, die bei verbundener Schnellwechselkupplung 1 aneinander liegen und eine koaxiale Anordnung von Außenteil 2 und Innenteil 3 bezüglich der Drehachse 1a herstellen. Dies erleichtert zudem eine präzise und leichtgängige Führung der Raststifte 6 am Innenteil 3.

Am Außenteil 2 sind vorzugsweise Reinigungslöcher 18 zum Reinigen der Schnellwechselkupplung 1 ausgebildet, außerdem eine Antriebsverbindung 19, beispielsweise in Form eines Innengewindes.

Das Innenteil 3 umfasst vorzugsweise einen Haltebereich 20 für ein Werkzeug, eine Behälterkomponente oder dergleichen. Beispielsweise kann dort ein Verschlusskappeneinsatz zum Aufnehmen und Aufschrauben von Schraubverschlusskappen eingesetzt werden.

Die Figur 5 verdeutlicht den Einsatz der Schnellwechselkupplung 1 an einer Behälterbehandlungsmaschine 100, die beispielhaft als Verschließmaschine mit mehreren Verschließköpfen 21 (davon nur ein einziger dargestellt) zum Anbringen von Schraubverschlusskappen 22 an Behältern 23 ausgebildet ist. Die Verschließköpfe 21 umfassen an sich bekannte Hub-/Drehwellen 24 zum Übertragen des Drehmoments 4 und der Axialkraft 5 beim Aufschrauben der Schraubverschlusskappen 22 und laufen dabei kontinuierlich an einem Karussell 25 um eine Drehachse 25a um.

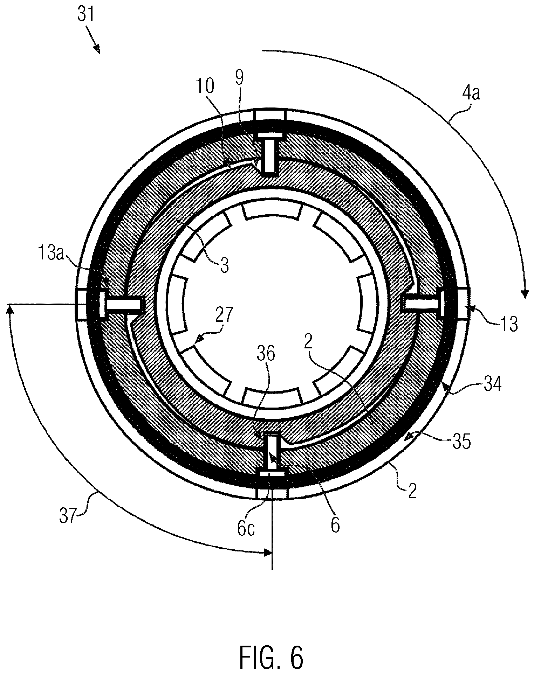

Synchron damit laufen die Behälter 23 beispielsweise an einem weiteren Karussell 26 auf bekannte Weise um eine Drehachse 26a kontinuierlich um. Im Bereich des Berührungspunkts der zugehörigen Teilkreise werden die Schraubverschlusskappen 22 auf die Behälter 23 gesetzt und aufgeschraubt. Die Schraubverschlusskappen 22 werden zu diesem Zweck von einem im Haltebereich 20 formschlüssig sitzenden Verschlusskappeneinsatz 27 (siehe die Figur 6) drehmomentfest gehalten. Derartige Verschlusskappeneinsätze 27 lassen sich auf einfache Weise herstellen und an bestimmte Behälterformate bzw. Kappenformate anpassen.

Für einen Formatwechsel kann das Innenteil 3 der Schnellwechselkupplung 1 werkzeuglos mit dem darinsitzenden Verschlusskappeneinsatz 27 vom Außenteil 2 gelöst werden, indem das Innenteil 3 zunächst entgegen der Arbeitsdrehrichtung 4a verdreht und dann nach unten abgezogen wird. Folglich kann dabei der Zugang zum Verschließkopf 21 von unten erfolgen. Ein platzraubender seitlicher Zugang ist dagegen entbehrlich. Die Schnellwechselkupplung 1 lässt sich zudem einfach reinigen.

Die Schnellwechselkupplung 1 ermöglicht ferner eine zuverlässige und spielfreie Übertragung unidirektionaler Drehmomente 4 und axialer Andruckkräfte 5.

Die Figur 6 zeigt im Querschnitt von oben eine Schnellwechselkupplung 31, die sich von obiger Ausführungsform durch eine andere federnde Lagerung der Raststifte 6 im Außenteil 2 unterscheidet. Die Vorspannung kann demnach von einem elastischen Ring 34 erzeugt werden, beispielsweise von einem O-Ring, der die Bohrungen 13 in einer umfänglich verlaufenden Nut 35 sitzend umspannt und von außen mittels Dehnspannung auf die Raststifte 6 drückt.

Die Figur 6 zeigt die Raststifte 6 in eingerasteter Stellung in zugehörigen Rastaussparungen 36, die hier beispielhaft, jedoch nicht zwingend, als Sacklöcher ausgebildet sind. Schematisch angedeutet sind ferner die Führungsnuten 10 und die zweiten Führungsfasen 9 für die Raststifte 6. Diese Elemente sind, stellvertretend für eine Vielzahl möglicher Verteilungsmuster, beispielhaft in vierfacher Ausführung in einheitlichen Winkelabständen 37 zueinander dargestellt. Im Innenteil 3 ist ferner ein Verschlusskappeneinsatz 27 zum drehfesten Klemmen von Schraubverschlusskappen 22 schematisch angedeutet.

Beim Verdrehen von Außenteil 2 und Innenteil 3 zueinander entgegen der Arbeitsdrehrichtung 4a werden die Raststifte 6 von den zweiten Führungsfasen 9 und den Führungsnuten 10 in den Bohrungen 13 gegen den Widerstand des elastischen Rings 34 nach außen gedrückt, Der elastische Ring 34 wird im Bereich der Bohrungen 13 nach außen gedehnt, bleibt jedoch in der umfänglichen Nut 35 geführt.

Der die Raststifte 6 umfänglich umspannende elastische Ring 34 bewirkt gleichzeitig die Vorspannung nach innen und die Sicherung der Raststifte 6 gegen ein Herausfallen nach außen.

Die Merkmale der beschriebenen und dargestellten Ausführungsformen der Schnellwechselkupplung 1, 31 können miteinander kombiniert und/oder gegenseitig ersetzt werden. Ebenso können Anzahl und Winkelverteilung der Raststifte 6 und Rastaussparungen 8 an unterschiedliche Anwendungen sowie an jeweils zu übertragende Drehmomente 4 und axiale Andruckkräfte 5 angepasst werden. Ferner können mit der Schnellwechselkupplung 1, 31 prinzipiell auch axiale Zugkräfte übertragen werden.

## Patentansprüche

1. Schnellwechselkupplung (1, 31) für eine Verschließmaschine, mit einem Außenteil (2) und einem darin formschlüssig eingreifenden Innenteil (3), zwischen denen Drehmomente (4) in einer Arbeitsdrehrichtung (4a) sowie Axialkräfte (5) übertragen werden können, wobei das Außenteil (2) und das Innenteil (3) durch Ineinanderschieben und Verdrehen miteinander verbindbar sind, **dadurch gekennzeichnet, dass** das Außenteil (2) nach innen federnd vorgespannte Raststifte (6) umfasst, und das Innenteil (3) erste Führungsfasen (7) für die Raststifte (6) umfasst, um diese beim Ineinanderschieben nach außen zu drücken, sowie Rastaussparungen (8, 36), in die die Raststifte (6) beim anschließenden Verdrehen in Arbeitsdrehrichtung (4a) drehfest und axial fest einrasten können.

2. Schnellwechselkupplung nach Anspruch 1, wobei an den Rastaussparungen (8, 36) zweite Führungsfasen (9) für die Raststifte (6) ausgebildet sind, um diese beim Verdrehen entgegen der Arbeitsdrehrichtung (4a) nach außen zu drücken und aus den Rastaussparungen (8) zu führen.

3. Schnellwechselkupplung nach Anspruch 1 oder 2, wobei zwischen den ersten und zweiten Führungsfasen (7, 9) im Wesentlichen umfänglich verlaufende Führungsnuten (10) für die Raststifte (6) ausgebildet sind.

4. Schnellwechselkupplung nach Anspruch 3, wobei die Führungsnuten (10) eine axiale Steigung (11) aufweisen und/oder eine exzentrische Führungsfläche (10a) für die Raststifte (6) mit einem zu den Rastaussparungen (8, 36) hin abnehmenden Führungsradius (12).

5. Schnellwechselkupplung nach Anspruch 3 oder 4, wobei die Raststifte (6) eine im Wesentlichen ebene und/oder konvex gekrümmte Stirnfläche (6a) und die Führungsnuten (10) insbesondere einen korrespondierenden Führungsquerschnitt aufweisen.

6. Schnellwechselkupplung nach einem der vorigen Ansprüche, wobei die ersten Führungsfasen (7) quer, insbesondere orthogonal, zur Arbeitsdrehrichtung (4a) und in Richtung vom Außenteil (2) weg schräg nach außen verlaufen.

7. Schnellwechselkupplung nach einem der vorigen Ansprüche, wobei die Raststifte (6), die ersten Führungsfasen (7) und die Rastaussparungen (8, 36) jeweils mindestens dreifach in einander entsprechender umfänglicher Verteilung ausgebildet sind.

8. Schnellwechselkupplung nach einem der vorigen Ansprüche, wobei das Außenteil (2) zum Vorspannen der Raststifte (6) diesen zugeordnete Druckfedern (4) und/oder einen die Raststifte (6) umspannenden elastischen Ring (34) umfasst.

9. Schnellwechselkupplung nach einem der vorigen Ansprüche, wobei am Außenteil (2) ferner Anschläge (13a) für die Raststifte (6) ausgebildet, die ein Ausfahren der Raststifte (6) aus dem Außenteil (2) nach innen hin begrenzen.

10. Schnellwechselkupplung nach einem der vorigen Ansprüche, wobei am Außenteil (2) Reinigungslöcher (18) ausgebildet sind.

11. Schnellwechselkupplung nach einem der vorigen Ansprüche, wobei am Außenteil (2) und am Innenteil (3) zueinander passende konzentrische Passflächen (16, 17) ausgebildet sind.

12. Schnellwechselkupplung nach einem der vorigen Ansprüche, wobei das Außenteil (2) eine Antriebsverbindung (19) für eine insbesondere oberhalb angeordnete Hub-/Drehwelle (24) aufweist.

13. Schnellwechselkupplung nach einem der vorigen Ansprüche, wobei das Innenteil (3) als auswechselbarer Halter für einen Werkzeugeinsatz oder eine Behälterkomponente ausgebildet ist, insbesondere als Halter für einen Verschlusskappeneinsatz (27) zum Aufschrauben von Verschlusskappen (22).

14. Verschließkopf (21) zum Anbringen von Schraubverschlusskappen (22) auf Behälter (23), mit der Schnellwechselkupplung (1) nach wenigstens einem der vorigen Ansprüche.

15. Verschließmaschine für Behälter, mit einem kontinuierlich drehbaren Behälterkarussell (25) und mehreren daran umlaufenden Verschließköpfen (21) nach Anspruch 14.

## Claims

1. Quick-change coupling (1, 31) for a container treatment machine (100), in particular a capping machine, with an outer member (2) and an inner member (3) engaging therewith in a positive-fit manner between which members torques (4) in a working direction of rotation (4a) and axial forces (5 ) can be transmitted, wherein said outer member (2) and said inner member (3) are connected to each other by pushing one into the other and twisting, **characterized in that** said outer member (2) comprises locking pins (6) preloaded resiliently inwardly, and where said inner member (3) comprises first guide bevels (7) for said locking pins (6) for forcing them outwardly when one is pushed into the other, and engagement recesses (8, 36) in which said locking pins (6) can engage in a rotationally fixed and axially fixed manner during the subsequent twisting motion in the working direction of rotation (4a).

2. Quick-change coupling according to claim 1, where second guide bevels (9) are formed on said engagement recesses (8, 36) for said locking pins (6) for forcing them outwardly during the twisting motion in a direction opposite to said working direction of rotation (4a) and to guide them out from said engagement recesses (8).

3. Quick-change coupling according to claim 1 or 2, where guide grooves (10) extending substantially circumferentially are formed for said locking pins (6) between said first and second guide bevels (7, 9).

4. Quick-change coupling according to claim 3, where said guide grooves (10) have an axial inclination (11) and/or an eccentric guide surface (10a) for said locking pins (6) with a guide radius (12) decreasing toward said engagement recesses (8, 36).

5. Quick-change coupling according to claim 3 or 4, where said locking pins (6) have a substantially flat and/or convexly curved face side (6a) and said guide grooves (10) in particular a guide cross-section corresponding thereto.

6. Quick-change coupling according to one of the preceding claims, where said first guide bevels (7) extend transversely, in particular orthogonally, to said working direction of rotation (4a) and obliquely outwardly in the direction away from outer member (2).

7. Quick-change coupling according to one of the preceding claims, where said locking pins (6), said first guide bevels (7) and said engagement recesses (8, 36) are each formed at least three-fold in mutually corresponding circumferential distribution.

8. Quick-change coupling according to one of the preceding claims, where said outer member (2), for preloading said locking pins (6), preferably comprises compression springs (4) associated with the latter and/or an elastic ring (34) enveloping said locking pins (6).

9. Quick-change coupling according to one of the preceding claims, where stops (13a) are additionally formed on said outer member (2) for said locking pins (6) and limit the motion of said locking pins (6) out from said outer member (2).

10. Quick-change coupling according to one of the preceding claims, where cleaning holes (18) are formed on said outer member (2).

11. Quick-change coupling according to one of the preceding claims, where matching concentric mating surfaces (16, 17) are formed on said outer member (2) and on said inner member (3).

12. Quick-change coupling according to one of the preceding claims, where said outer member (2) comprises a drive connection (19) for a lifting/rotating shaft (24) arranged, in particular, thereabove.

13. Quick-change coupling according to one of the preceding claims, where said inner member (3) is configured as an exchangeable holder for a tool insert or a container component, in particular as a holder for a cap insert (27) for screwing on caps (22).

14. Capping chuck (21) for mounting screw caps (22) on containers (23) with said quick-change coupling (1) according to at least one of the preceding claims.

15. Capping machine for containers, comprising a continuously rotatable container carousel (25) and several of capping chucks (21) revolving thereon according to claim 14.

## Revendications

1. Raccord rapide (1, 31) pour une machine à sceller, comprenant une partie extérieure (2) et une partie intérieure (3) venant en prise par complémentarité de forme dans celle-ci, entre lesquelles des couples (4) ainsi que des forces axiales (5) peuvent être transmis dans une direction de rotation de travail (4a) , la partie extérieure (2) et la partie intérieure (3) pouvant être reliées l'une à l'autre par emboîtement l'une dans l'autre et rotation, **caractérisé en ce que** la partie extérieure (2) comprend des goupilles d'encliquetage (6) précontraintes élastiquement vers l'intérieur, et la partie intérieure (3) comprend des premiers biseaux de guidage (7) pour les goupilles d'encliquetage (6) afin de les pousser vers l'extérieur lors de l'emboîtement l'une dans l'autre, ainsi que des évidements d'encliquetage (8, 36) dans lesquels les goupilles d'encliquetage (6) peuvent s'encliqueter de manière solidaire en rotation et axialement lors d'une rotation ultérieure dans la direction de rotation de travail (4a).

2. Raccord rapide selon la revendication 1, dans lequel des seconds biseaux de guidage (9) sont formés sur les évidements d'encliquetage (8, 36) pour les goupilles d'encliquetage (6) afin de les pousser vers l'extérieur lors d'une rotation à l'opposé de la direction de rotation de travail (4a) et de les guider hors des évidements d'encliquetage (8).

3. Raccord rapide selon la revendication 1 ou 2, dans lequel des rainures de guidage (10) s'étendant sensiblement circonférentiellement pour les goupilles d'encliquetage (6) sont formées entre les premiers et seconds biseaux de guidage (7, 9).

4. Raccord rapide selon la revendication 3, dans lequel les rainures de guidage (10) présentent une pente axiale (11) et/ou une surface de guidage excentrique (10a) pour les goupilles d'encliquetage (6) avec un rayon de guidage (12) diminuant vers les évidements d'encliquetage (8, 36).

5. Raccord rapide selon la revendication 3 ou 4, dans lequel les goupilles d'encliquetage (6) présentent une surface frontale (6a) essentiellement plane et/ou incurvée de manière convexe et les rainures de guidage (10) présentent en particulier une section transversale de guidage correspondante.

6. Raccord rapide selon l'une quelconque des revendications précédentes, dans lequel les premiers biseaux de guidage (7) s'étendent transversalement, en particulier orthogonalement, par rapport à la direction de rotation de travail (4a) et en s'éloignant de la partie extérieure (2) de manière oblique vers l'extérieur.

7. Raccord rapide selon l'une quelconque des revendications précédentes, dans lequel les goupilles d'encliquetage (6), les premiers biseaux de guidage (7) et les évidements d'encliquetage (8, 36) sont chacun réalisés au moins trois fois imbriqués dans une distribution circonférentielle correspondante.

8. Raccord rapide selon l'une quelconque des revendications précédentes, dans lequel la partie extérieure (2) comprend des ressorts de compression (4) qui leur sont associés et/ou une bague élastique (34) couvrant les goupilles d'encliquetage (6) pour solliciter les goupilles d'encliquetage (6).

9. Raccord rapide selon l'une quelconque des revendications précédentes, dans lequel des butées (13a) pour les goupilles d'encliquetage (6) sont en outre formées sur la partie extérieure (2), qui limitent l'extension des goupilles d'encliquetage (6) depuis la partie extérieure (2) vers l'intérieur.

10. Raccord rapide selon l'une des revendications précédentes, dans lequel des orifices de nettoyage (18) sont formés sur la partie extérieure (2).

11. Raccord rapide selon l'une quelconque des revendications précédentes, dans lequel des surfaces d'ajustage concentriques (16, 17) adaptées l'une à l'autre sont formées sur la partie extérieure (2) et sur la partie intérieure (3).

12. Raccord rapide selon l'une quelconque des revendications précédentes, dans lequel la partie extérieure (2) présente une liaison d'entraînement (19) pour un arbre de levage/rotation (24) agencé en particulier au-dessus.

13. Raccord rapide selon l'une quelconque des revendications précédentes, dans lequel la partie intérieure (3) est conçue comme un support remplaçable pour un insert d'outil ou un composant de récipient, en particulier comme un support pour un insert de bouchon de fermeture (27) pour visser des bouchons de fermeture (22).

14. Tête de scellage (21) pour fixer des bouchons de fermeture à vis (22) sur des récipients (23), avec le raccord rapide (1) selon au moins l'une des revendications précédentes.

15. Machine de scellage de récipients, comprenant un carrousel de récipients (25) pouvant tourner en continu et plusieurs têtes de scellage (21) selon la revendication 14 qui tournent autour de celui-ci.
